# EUROPÄISCHE PATENTSCHRIFT

(11) **EP 3 447 456 B1**
(45) Veröffentlichungstag und Bekanntmachung des Hinweises auf die Patenterteilung: **30.04.2025**
(21) Anmeldenummer: 18182562.1
(22) Anmeldetag: 10.07.2018
(51) Int. Cl.: G01F 23/284, G01S 13/88

(54) **TDR-FÜLLSTANDMESSGERÄT UND VERFAHREN ZUM BETREIBEN EINES TDR-FÜLLSTANDMESSGERÄTS**
TDR FILL LEVEL MEASURING DEVICE AND METHOD FOR OPERATING A TDR FILL LEVEL MEASURING DEVICE
APPAREIL DE MESURE DE NIVEAU DE REMPLISSAGE TDR ET PROCÉDÉ DE FONCTIONNEMENT D'UN APPAREIL DE MESURE DE NIVEAU DE REMPLISSAGE TDR

(30) Priorität: 25.08.2017 DE 102017119502
(43) Veröffentlichungstag der Anmeldung: 27.02.2019
(73) Patentinhaber: KROHNE S.A.S., 26103 Roman-sur-Isere Cedex (FR)
(72) Erfinder: Kesba, Mahmoud Khodjet, 26100 Romans-Sur-Isere (FR)
(74) Vertreter: Gesthuysen Patentanwälte

(56) Entgegenhaltungen:
- EP-A1- 2 884 245
- EP-A1- 3 173 750
- WO-A1-03/016835
- DE-A1- 102006 019 191
- DE-U1- 202005 020 158
- JP-B2- S5 936 214
- US-A- 3 474 337
- US-A1- 2014 104 099
- ANONYMOUS: "Technical Note 00840-0100-4530, Rev DB, "Using GWR for Level in High Pressure Steam Applications"", 15 October 2016 (2016-10-15), XP055693883, Retrieved from the Internet <URL:https://www.emerson.com/documents/automation/technical-note-using-guided-wave-radar-for-level-in-high-pressure-steam-applications-rosemount-en-76264.pdf> [retrieved on 20200511]

## Beschreibung

Die Erfindung geht aus von einem TDR (Time Domain Reflectometry)-Füllstandmessgerät zur Messung des Füllstandes eines Mediums in einem Behälter, umfassend wenigstens eine Sendeeinheit zur Aussendung eines pulsförmigen elektromagnetischen Messsignals, wenigstens eine Empfangseinheit für den Empfang wenigstens eines Reflexionssignals, wenigstens eine Auswerteeinheit zur Auswertung des wenigstens einen Reflexionssignals und wenigstens einen Wellenleiter, wobei der Wellenleiter wenigstens einen Leiter zur Führung des Messsignals und des Reflexionssignals aufweist, wobei der Wellenleiter wenigstens zwei Wellenleiterabschnitte aufweist, wobei jeder Wellenleiterabschnitt wenigstens eine funktionale Wellenleiterquerschnittsfläche aufweist, wobei die funktionale Wellenleiterquerschnittsfläche der Querschnittsfläche des wenigstens einen Leiters entspricht, wobei wenigstens ein Referenzreflektor vorhanden ist und wobei der Referenzreflektor derart ausgestaltet und angeordnet ist, dass im Betrieb zumindest ein Teil des Messsignals an dem wenigstens einen Referenzreflektor wenigstens einmal reflektiert wird.

Darüber hinaus betrifft die Erfindung ein Verfahren zum Betreiben eines TDR-Füllstandmessgeräts zur Messung des Füllstandes eines Mediums in einem Behälter, wobei das TDR-Füllstandmessgerät wenigstens eine Sendeeinheit zur Aussendung eines elektromagnetischen Messsignals, wenigstens eine Empfangseinheit für den Empfang wenigstens eines reflektierten Reflexionssignals, wenigstens eine Auswerteeinheit zur Auswertung des wenigstens einen Reflexionssignals und wenigstens einen Wellenleiter aufweist, wobei der Wellenleiter wenigstens einen Leiter zur Führung des Messsignals und des Reflexionssignals aufweist, wobei der Wellenleiter wenigstens zwei Wellenleiterabschnitte aufweist, wobei jeder Wellenleiterabschnitt wenigstens eine funktionale Wellenleiterquerschnittsfläche aufweist, wobei die funktionale Wellenleiterquerschnittsfläche der Querschnittsfläche des wenigstens einen Leiters entspricht, wobei wenigstens ein Referenzreflektor vorhanden ist und wobei der Referenzreflektor derart ausgestaltet und angeordnet ist, dass im Betrieb zumindest ein Teil des Messsignals an dem wenigstens einen Referenzreflektor wenigstens einmal reflektiert wird.

Aus dem Stand der Technik bekannte TDR-Füllstandmessgeräte nutzen zur Messung des Füllstands eines Mediums, vorzugsweise einer Flüssigkeit, in einem Behälter das Prinzip der Zeitbereichsreflektometrie, wobei der Abstand einer Sendeeinheit zur Oberfläche des zu messenden Mediums basierend auf der Laufzeit eines von der Sendeeinheit ausgesendeten und von der Oberfläche reflektierten Messsignals bestimmt wird. Aus dem gemessenen Abstand wird dann bei Kenntnis der Tiefe des Behälters der Füllstand des Mediums im Behälter bestimmt. Wesentlich für die korrekte Bestimmung des Füllstandes ist die Kenntnis der Ausbreitungsgeschwindigkeit des in Richtung des Mediums gesendeten Messsignals.

Die Ausbreitungsgeschwindigkeit des Messsignals ist insbesondere abhängig von der Permittivität ε des Mediums, durch das sich das Messsignal bewegt.

In einer Art der TDR-Füllstandmessung ist ein Wellenleiter vorhanden, der das Messsignal von der Sendeeinheit in Richtung des Mediums führt und der weiterhin das an der Oberfläche des Mediums reflektierte Reflexionssignal zur Empfangseinheit führt. Abhängig von der Anwendung, insbesondere von Parametern der Messumgebung, und abhängig von dem zu messenden Medium kann es vorkommen, dass das Messsignal oberhalb des Mediums Bereiche mit unterschiedlichen Permittivitäten durchläuft. Dies ist beispielsweise dann der Fall, wenn oberhalb des Mediums im Behälter ein Temperaturgradient vorhanden ist.

Zur Bestimmung der Permittivitätsverteilung oberhalb des Mediums ist aus dem Stand der Technik der Druckschrift US 7,525,476 B1 bekannt, in festgelegten Abständen an dem Wellenleiter Referenzreflektoren in Form von zylinderförmigen oder anders ausgestalteten Körpern anzuordnen. Aufgrund der Änderung der Impedanz wird das sich entlang des Wellenleiters ausbreitende Messsignal ebenfalls an den Referenzreflektoren reflektiert. Basierend auf der Kenntnis der zurückgelegten Strecke zwischen der Sendeeinheit bzw. der Empfangseinheit und dem jeweiligen Referenzreflektor sowie der Laufzeit des an dem Referenzreflektor reflektierten Messsignals kann die Permittivität ε des den Wellenleiter oberhalb des Referenzreflektors umgebenden Mediums bestimmt werden. Diese Information kann zur Korrektur der Ausbreitungsgeschwindigkeit des Messsignals entlang des Wellenleiters und damit zur Korrektur der Füllstandsbestimmung des Mediums genutzt werden.

Aus der Druckschrift DE 20 2005 020 158 U1 ist es weiterhin bekannt, den Referenzreflektor als lokale Störstelle in Form einer Öffnung, einer Einkerbung, einer Erhebung oder einer Blende im Wellenleiter auszubilden.

Zudem offenbart die Druckschrift EP 0 534 654 B1 den Referenzreflektor als Diskontinuität in Form von beispielsweise einem den Wellenleiter umgebenden Kragen oder in Form einer Verbindung von separat ausgestalteten Wellenleiterteilen auszugestalten.

Die Druckschrift EP 3 173 750 A1 offenbart ein Füllstandmessgerät zur Messung eines Füllstands eines Mediums in Anwesenheit einer die Laufzeit elektromagnetischer Wellen beeinflussenden Atmosphäre mittels einer elektromagnetischen Welle nach einem Laufzeitprinzip mit einer Auswerteeinheit, einer Sende- und Empfangseinheit zum Senden und Empfangen elektromagnetischer Wellen, mindestens einer Messsonde, und mindestens einer Referenzstelle, wobei die Auswerteeinheit so eingerichtet ist, dass sie bei der Verarbeitung der Laufzeit eines an der Referenzstelle reflektierten Signals eine Änderung der Geometrie der Referenzstelle in Abhängigkeit von den Umgebungsbedingungen berücksichtigt. Die Referenzstellen können auch als Verjüngungen der Messsonde ausgestaltet werden.

Ausgehend von diesem Stand der Technik liegt der vorliegenden Erfindung die Aufgabe zugrunde, ein TDR-Füllstandmessgerät anzugeben, das zum einen eine besonders hohe Zuverlässigkeit aufweist und weiterhin besonders einfach ausgestaltet ist. Darüber hinaus liegt der Erfindung die Aufgabe zugrunde, ein entsprechendes Verfahren zum Betreiben eines solchen TDR-Füllstandmessgeräts anzugeben.

Gemäß einer ersten Lehre der Erfindung wird die zuvor genannte Aufgabe durch ein TDR-Füllstandmessgerät nach Anspruch 1 gelöst. Erfindungsgemäß wurde erkannt, dass ein Referenzreflektor besonders einfach dadurch ausgestaltet werden kann, dass der Wellenleiter selbst in wenigstens einem Abschnitt als Referenzreflektor ausgebildet ist. In vorteilhafter Weise kann so auf den Einsatz von zusätzlichen an dem Wellenleiter angebrachten Körpern zur Erzeugung einer Referenzreflexion verzichtet werden.

Dabei sind die wenigstens zwei Wellenleiterabschnitte, zwischen denen der Referenzreflektor angeordnet ist, in Ausbreitungsrichtung des Messsignals unmittelbar aufeinander folgend angeordnet.

Zudem sind die Wellenleiterquerschnittsflächen, zwischen denen der Referenzreflektor angeordnet ist, im Betrieb an der Führung des Messsignals beteiligt.

Gemäß einer weiteren Ausgestaltung sind die Sendeeinheit und die Empfangseinheit als eine Einheit, nämlich als Sende-/Empfangseinheit, ausgestaltet.

Gemäß der Erfindung sind wenigstens zwei Referenzreflektoren vorhanden, wobei die wenigstens zwei Referenzreflektoren als Übergang zwischen jeweils zwei Wellenleiterabschnitten mit unterschiedlichen Größen der funktionalen Wellenleiterquerschnittsflächen ausgebildet sind. Gemäß dieser Ausgestaltung kann in wenigstens zwei Bereichen die Permittivität des den Wellenleiter umgebenden Mediums bestimmt werden, so dass eine Permittivitätsverteilung innerhalb des Behälters besonders genau erfasst werden kann.

Die funktionale Wellenleiterquerschnittsfläche kann beispielsweise rotationssymmetrisch insbesondere kreisförmig ausgestaltet sein oder oval oder viereckig, insbesondere quadratisch ausgestaltet sein.

Gemäß einer Ausgestaltung weist der Wellenleiter genau einen das Messsignal führenden Leiter auf.

Gemäß einer nächsten Ausgestaltung weist der Wellenleiter wenigstens zwei das Messsignal führende Leiter auf.

Gemäß der Erfindung sind die wenigstens zwei Referenzreflektoren als Verjüngung des zumindest einen an der Führung des Messsignals beteiligten Leiters des Wellenleiters ausgestaltet, also, in Ausbreitungsrichtung des Messsignals betrachtet, als Verkleinerung der Größe der funktionalen Wellenleiterquerschnittsfläche unter Beibehaltung der Form der funktionalen Wellenleiterquerschnittsfläche. Zudem kann ein weiterer Referenzreflektor ebenfalls als Verdickung des zumindest einen an der Führung des Messsignals beteiligten Leiters des Wellenleiters, also, in Ausbreitungsrichtung des Messsignals betrachtet, als Vergrößerung der Größe der funktionalen Wellenleiterquerschnittsfläche unter Beibehaltung der Form der funktionalen Wellenleiterquerschnittsfläche, ausgestaltet sein.

Denkbar ist es ebenfalls, dass im Betrieb wenigstens ein Referenzreflektor innerhalb des Mediums angeordnet ist, sodass auch eine Permittivitätsverteilung innerhalb des Mediums, beispielsweise eines mehrphasigen Mediums, erfasst werden kann.

Besonders vorteilhaft ist es weiterhin, wenn der Übergang der Form und/oder der Größe zwischen den funktionalen Wellenleiterquerschnittsflächen zumindest teilweise sprunghaft ausgestaltet ist. Bei dieser Ausgestaltung ist das an dem Übergang reflektierte Referenzreflexionssignal besonders schmal ausgestaltet, wodurch die Bestimmung der Laufzeit und damit die Bestimmung der Permittivität des den Wellenleiterabschnitt umgebenden Mediums besonders genau ist. Denkbar ist ebenfalls, dass der Übergang der Form und/oder der Größe zwischen den funktionalen Wellenleiterquerschnittsflächen zumindest teilweise stufenartig ausgestaltet ist. Gemäß dieser Ausgestaltung erzeugt der Referenzreflektor abhängig von der Anzahl und der Größe der Stufen wenigstens zwei unmittelbar aufeinanderfolgende Referenzreflexionssignale oder ein räumlich bzw. zeitlich ausgedehntes Referenzreflexionssignal. Diese Ausgestaltung weist den Vorteil auf, dass das Referenzreflexionssignal bei der Auswertung besonders gut von dem an der Oberfläche des Mediums reflektierten Reflexionssignal zu unterscheiden ist.

Gemäß einer weiteren Ausgestaltung ist der Übergang der Form und/oder der Größe zwischen den funktionalen Wellenleiterquerschnittsflächen zumindest teilweise in Form eines Übergangsbereichs, also kontinuierlich, ausgestaltet. Diese Ausgestaltung weist den Vorteil auf, dass das Referenzreflexionssignal zeitlich bzw. räumlich ausgedehnt und damit abgrenzbar von dem an der Oberfläche des Mediums reflektierten Reflexionssignals ist.

Besonders vorteilhaft ist der Übergang der Form und/oder der Größe zwischen den funktionalen Wellenleiterquerschnittsflächen zumindest teilweise in Ausbreitungsrichtung des Messsignals räumlich ausgedehnt. Beispielsweise kann der Übergang versetzt stufenartig oder versetzt sprunghaft ausgestaltet sein.

Gemäß der Erfindung sind wenigstens zwei Referenzreflektoren vorhanden, wobei die wenigstens zwei Referenzreflektoren als aufeinander folgende Verjüngungen des zumindest einen an der Führung des Messsignals beteiligten Leiters des Wellenleiters ausgestaltet sind. Vorteilhaft ist es ebenfalls, wenn wenigstens drei oder mehr Referenzreflektoren vorhanden sind, die jeweils als Verjüngung, vorzugsweise mit einem sprunghaften Übergang, des zumindest einen an der Führung des Messsignals beteiligten Leiters des Wellenleiters ausgestaltet sind.

Gemäß einer weiteren Ausgestaltung sind wenigstens zwei weitere Referenzreflektoren vorhanden, wobei die wenigstens zwei weiteren Referenzreflektoren als Verdickung des zumindest einen an der Führung des Messsignals beteiligten Leiter des Wellenleiters ausgestaltet sind. Vorteilhaft ist es ebenfalls, wenn wenigstens ein Referenzreflektor als Verjüngung ausgestaltet ist und wenigstens ein Referenzreflektor als Verdickung des zumindest einen an der Führung des Messsignals beteiligten Leiter des Wellenleiters ausgestaltet ist. Gemäß einer nicht erfindungsgemäßen Ausgestaltung sind wenigstens drei oder mehr Referenzreflektoren vorhanden, die jeweils als Verdickung, vorzugsweise mit einem sprunghaften Übergang, des zumindest einen an der Führung des Messsignals beteiligten Leiters des Wellenleiters ausgestaltet sind.

Gemäß einer weiteren Ausgestaltung ist die Position eines Referenzreflektors am Wellenleiter in Abhängigkeit von den Dimensionen des Wellenleiters und der Messumgebung und/oder von der im Betrieb zu erwartenden Temperaturverteilung im Behälter festgelegt. Es ist beispielsweise vorteilhaft, wenn wenigstens zwei Referenzreflektoren vorhanden sind, wobei die wenigstens zwei Referenzreflektoren in regelmäßigen Abständen entlang des Wellenleiters angeordnet sind. Beispielsweise beträgt der Abstand von der Einkopplung des Messsignals in den Behälter zu dem ersten Referenzreflektor bzw. der Abstand zwischen den Referenzreflektoren jeweils 1 m.

Gemäß einer besonders bevorzugten Ausgestaltung ist der Abstand zwischen der Einkopplung des Messsignals in den Behälter bzw. der Abstand zwischen den einzelnen Referenzreflektoren als Vielfaches der Wellenlänge des Messsignals ausgestaltet. Vorzugsweise überlagern sich das hinlaufende Messsignal und das rücklaufende Reflexionssignal konstruktiv.

Gemäß einer weiteren Ausgestaltung entspricht der Abstand zwischen der Einkopplung des Messsignals in den Behälter bzw. der Abstand zwischen den einzelnen Referenzreflektoren keinem Vielfachen der Wellenlänge. Diese Ausgestaltung weist den Vorteil auf, dass das an der Oberfläche des Mediums reflektierte Reflexionssignal besonders einfach von den Referenzreflexionssignalen zu unterscheiden ist.

Gemäß einer weiteren Ausgestaltung des Füllstandmessgeräts sind wenigstens zwei Referenzreflektoren vorhanden, die in unregelmäßigen Abständen entlang des Wellenleiters angeordnet sind.

Weiterhin ist es vorteilhaft, wenn zumindest der Übergang zwischen den funktionalen Wellenleiterquerschnittsflächen, der einen Referenzreflektor bildet, einstückig ausgestaltet ist. Besonders bevorzugt weist der wenigstens eine Leiter in Ausbreitungsrichtung des Messsignals keine Materialübergänge oder Fügestellen auf. Der wenigstens eine Leiter des Wellenleiters ist vorzugsweise aus einem Werkstück hergestellt.

Besonders bevorzugt ist der Wellenleiter aus einem Werkstück hergestellt.

Gemäß einer weiteren Ausgestaltung ist der Wellenleiter als Koaxialleiter, umfassend wenigstens einen Innenleiter und wenigstens einen Außenleiter, ausgebildet, wobei die wenigstens zwei Referenzreflektoren durch den wenigstens einen Innenleiter ausgebildet sind.

Weiterhin ist es vorteilhaft, wenn der Wellenleiter als Koaxialleiter, umfassend wenigstens einen Innenleiter und wenigstens einen Außenleiter, ausgestaltet ist, wobei die wenigstens zwei Referenzreflektor durch den wenigstens einen Außenleiter ausgebildet sind.

Denkbar ist ebenfalls, dass der Wellenleiter als Koaxialleiter, umfassend wenigstens einen Innenleiter und wenigstens einen Außenleiter, ausgestaltet ist, wobei wenigstens ein Referenzreflektor durch den wenigstens einen Außenleiter ausgebildet ist und wobei wenigstens ein Referenzreflektor durch den wenigstens einen Innenleiter ausgebildet ist.

Besonders bevorzugt sind der durch den Innenleiter gebildete Referenzreflektor und der durch den Außenleiter gebildete Referenzreflektor auf einer Höhe angeordnet.

Ebenfalls vorteilhaft ist es, wenn der durch den Innenleiter gebildete Referenzreflektor und der durch den Außenleiter gebildete Referenzreflektor auf unterschiedlichen Höhen angeordnet sind.

Alternativ kann der Wellenleiter als einfache Monosonde oder als Doppelsonde ausgestaltet sein.

Ist der Wellenleiter als Doppelsonde umfassend einen ersten und einen zweiten Leiter, ausgestaltet, sind die wenigstens zwei Referenzreflektoren vorzugsweise durch einen Leiter ausgebildet.

Alternativ ist, wenn der Wellenleiter als Doppelsonde umfassend einen ersten und einen zweiten Leiter ausgestaltet ist, wenigstens ein Referenzreflektor durch den ersten Leiter ausgebildet und wenigstens ein Referenzreflektor durch den zweiten Leiter ausgebildet.

Besonders bevorzugt sind der durch den ersten Leiter gebildete Referenzreflektor und der durch den zweiten Leiter gebildete Referenzreflektor auf einer Höhe angeordnet.

Ebenfalls vorteilhaft ist es, wenn der durch den ersten Leiter gebildete Referenzreflektor und der durch den zweiten Leiter gebildete Referenzreflektor auf unterschiedlichen Höhen angeordnet sind.

Gemäß einer zweiten Lehre der Erfindung ist die eingangs hergeleitete Aufgabe durch ein Verfahren nach Anspruch 10 gelöst.

Das Verfahren umfasst die folgenden Schritte:
- Aussenden eines Messsignals entlang des Wellenleiters durch die Sendeeinheit,
- Empfangen wenigstens eines Reflexionssignals durch die Empfangseinheit, wobei das Reflexionssignal zumindest einer Reflexion des Messsignals an dem wenigstens einen Referenzreflektor entspricht,
- Empfangen wenigstens eines weiteren Reflexionssignals durch die Empfangseinheit, wobei das weitere Reflexionssignal einer Reflexion des Messsignals an der Oberfläche des zu messenden Mediums entspricht,
- Bestimmen wenigstens einer Permittivität ε des einen Wellenleiterabschnitt umgebenden Mediums aus der Laufzeit des wenigstens einen Reflexionssignals durch die Auswerteeinheit, wobei das Reflexionssignal einer Reflexion des Messsignals an dem wenigstens einen Referenzreflektor entspricht,
- Bestimmen eines Korrekturfaktors der Ausbreitungsgeschwindigkeit des Messsignals entlang des Wellenleiters basierend auf der wenigstens einen Permittivität ε und
- Bestimmen des Füllstandes des in dem Behälter befindlichen Mediums aus der Laufzeit und der korrigierten Ausbreitungsgeschwindigkeit des wenigstens einen weiteren Reflexionssignals, wobei das weitere Reflexionssignal einer Reflexion des Messsignals an der Oberfläche des zu messenden Mediums entspricht.

Dabei ist das TDR-Füllstandmessgerät besonders bevorzugt nach einer der zuvor beschriebenen Ausgestaltungen ausgebildet.

Im Einzelnen gibt es nun eine Vielzahl von Möglichkeiten, das erfindungsgemäße Füllstandmessgerät und das erfindungsgemäße Verfahren auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen
- Fig. 1: ein erstes Ausführungsbeispiel eines Füllstandmessgeräts,
- Fig. 2: ein zweites Ausführungsbeispiel eines Wellenleiters,
- Fig. 3: ein drittes Ausführungsbeispiel eines Wellenleiters,
- Fig. 4: ein viertes Ausführungsbeispiel eines Wellenleiters,
- Fig. 5: ein fünftes Ausführungsbeispiel eines Wellenleiters,
- Fig. 6: ein sechstes Ausführungsbeispiel eines Wellenleiters,
- Fig. 7: ein siebtes Ausführungsbeispiel eines Wellenleiter,
- Fig. 8: ein achtes Ausführungsbeispiel eines Wellenleiters und
- Fig. 9: ein erstes Ausführungsbeispiel eines erfindungsgemäßen Verfahrens.

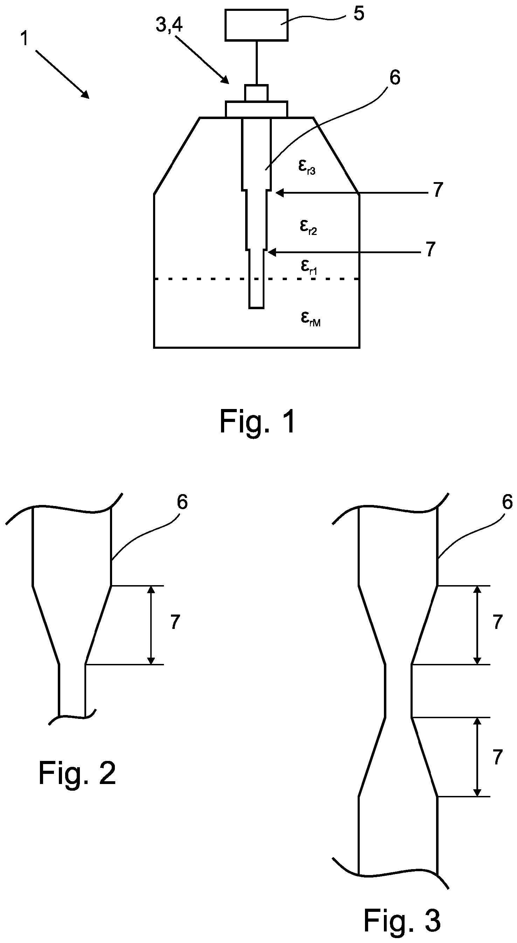

In Fig. 1 ist dargestellt ein erstes Ausführungsbeispiel eines TDR-Füllstandmessgeräts 1 zur Messung des Füllstandes eines Mediums in einem Behälter, umfassend wenigstens eine Sendeeinheit 3 zur Aussendung eines pulsförmigen elektromagnetischen Messsignals, eine Empfangseinheit 4 für den Empfang wenigstens eines Reflexionssignals, eine Auswerteeinheit 5 für die Auswertung des wenigstens einen Reflexionssignals und einen Wellenleiter 6 zur Führung des Messsignals und des Reflexionssignals.

Der Wellenleiter 6 ist abschnittsweise als Referenzreflektor 7 ausgestaltet, wobei jeder Referenzreflektor 7 gebildet wird durch einen sprunghaften Übergang zwischen zwei Wellenleiterabschnitten mit unterschiedlicher Größe der funktionalen Wellenleiterquerschnittsflächen 8. Im dargestellten Ausführungsbeispiel sind zwei Referenzreflektoren 7 vorhanden, die jeweils als Verjüngung des Wellenleiters 6 ausgebildet sind. Dabei ist sind die funktionalen Wellenleiterquerschnittsflächen 8 in den einzelnen Wellenleiterabschnitten jeweils kreisförmig ausgestaltet.

Aufgrund der bekannten Position der Referenzreflektoren 7 bzw. der bekannten Länge der einzelnen Wellenleiterabschnitten und der gemessenen Laufzeit der an den Referenzreflektoren 7 reflektierten Reflexionssignale, lässt sich die Permittivität εᵣ₃ bzw. εᵣ₂ des die entsprechenden Wellenleiterabschnitte umgebenden Mediums bestimmen, die zur Korrektur der Ausbreitungsgeschwindigkeit des Messsignals und damit zur Bestimmung Füllstandes des Mediums in dem Behälter verwendet werden kann.

Gemäß einem anderen Ausführungsbeispiel ist auch wenigstens ein Referenzreflektor 7 im Medium angeordnet, so dass ebenfalls die Permittivität ε_{rM} des Mediums bestimmt werden kann.

Fig. 2 zeigt ein zweites Ausführungsbeispiel eines Wellenleiters 6 mit einem Referenzreflektor 7, wobei der Übergang der Größe der funktionalen Wellenleiterquerschnittsfläche 8 als räumlich ausgedehnter kontinuierlicher Übergangsbereich ausgestaltet ist.

Fig. 3 zeigt ein drittes Ausführungsbeispiel eines Wellenleiters 6 mit zwei Referenzreflektoren 7, wobei ein Referenzreflektor 7 als räumlich ausgedehnte Verjüngung des Wellenleiters 6 ausgestaltet ist und wobei ein zweiter Referenzreflektor 7 als Verdickung mit räumlich ausgedehntem Übergangsbereich ausgestaltet ist.

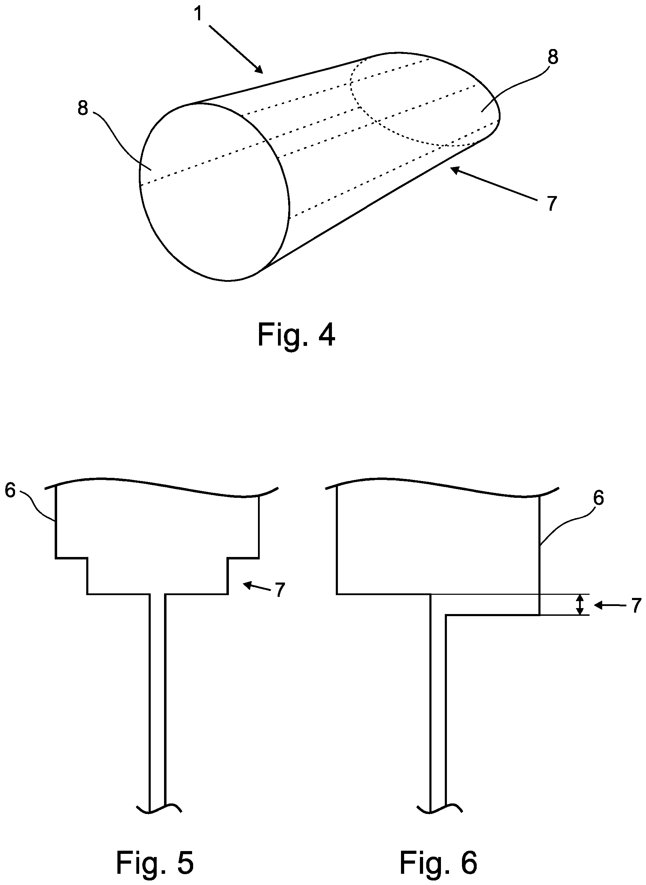

In Fig. 4 ist ein weiteres Ausführungsbeispiel eines Wellenleiters 6 dargestellt, wobei der Referenzreflektor 7 als Übergang zwischen zwei Wellenleiterabschnitten mit unterschiedlichen Formen der funktionalen Wellenleiterquerschnittsflächen 8 ausgestaltet ist. Im Detail ist in einem ersten Wellenleiterabschnitt die funktionale Wellenleiterquerschnittsfläche 8 kreisförmig ausgestaltet und in einem zweiten Wellenleiterabschnitt ist die funktionale Wellenleiterquerschnittsfläche 8 oval ausgebildet.

Fig. 5 zeigt ein weiteres Ausführungsbeispiel eines Wellenleiters 6 mit einem Referenzreflektor 7, wobei der Referenzreflektor 7 als stufenförmiger Übergang der Größe der funktionalen Wellenleiterquerschnittsflächen 8 eines ersten und eines zweiten Wellenleiterabschnitts ausgestaltet ist.

In Fig. 6 ist ein weiteres Ausführungsbeispiel eines Wellenleiters 6 mit einem Referenzreflektor 7 dargestellt, wobei der als Übergang zwischen zwei Wellenleiterabschnitten mit unterschiedlicher Größe der funktionalen Wellenleiterquerschnittsflächen 8 ausgestaltete Referenzreflektor 7 versetzt sprunghaft ausgestaltet ist und damit insgesamt als räumlich ausgedehnter Übergangsbereich ausgestaltet ist.

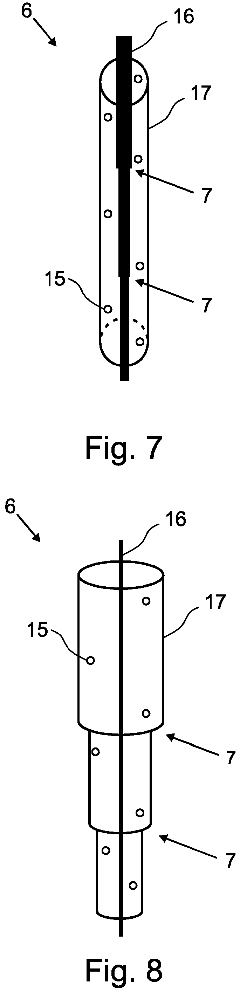

Der in Fig. 7 dargestellte Wellenleiter 6 ist als Koaxialleiter umfassend einen Innenleiter 16 und einen Außenleiter 17 ausgestaltet. Der Außenleiter 17 weist Löcher 15 für den Durchlass des zu vermessenden Mediums auf. Der Innenleiter 16 ist abschnittsweise als Referenzreflektor 7 ausgestaltet.

Der in Fig. 8 dargestellte Wellenleiter 6 ist ebenfalls als Koaxialleiter umfassend einen Innenleiter 16 und einen Außenleiter 17 ausgestaltet. Der Außenleiter 17 weist Löcher 15 für den Durchlass des zu vermessenden Mediums auf. Zudem ist der Außenleiter 17 abschnittsweise als Referenzreflektor 7 ausgestaltet.

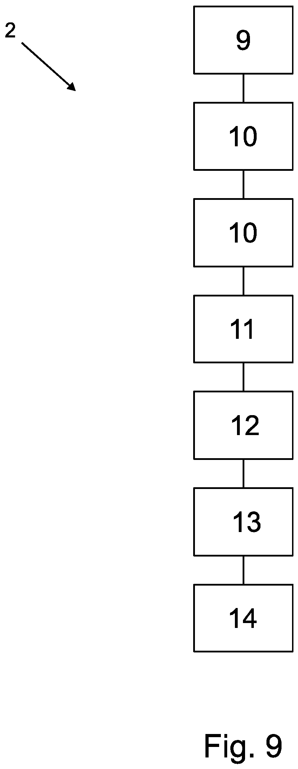

In Fig. 9 ist ein erstes Ausführungsbeispiel eines erfindungsgemäßen Verfahrens 2 zum Betreiben eines TDR-Füllstandmessgeräts 1 zur Messung des Füllstandes eines Mediums in einem Behälter dargestellt. Dabei ist das TDR-Füllstandmessgerät 1 wie in Fig. 1 dargestellt, ausgestaltet. Das Verfahren 2 umfasst die folgenden Schritte:
- Aussenden 9 eines Messsignals entlang des Wellenleiters 6 durch die Sendeeinheit 3,
- Empfangen 10 eines ersten Reflexionssignals durch die Empfangseinheit 4, wobei das Reflexionssignal einer Reflexion des Messsignals an dem ersten Referenzreflektor 7 entspricht,
- Empfangen 10 eines zweiten Reflexionssignals durch die Empfangseinheit 4, wobei das Reflexionssignal einer Reflexion des Messsignals an dem zweiten Referenzreflektor 7 entspricht,
- Empfangen 11 eines weiteren Reflexionssignals durch die Empfangseinheit 4, wobei das Reflexionssignal einer Reflexion des Messsignals an der Oberfläche des zu messenden Mediums entspricht,
- Bestimmen 12 der Permittivität εᵣ₃ und εᵣ₂ des die jeweiligen Wellenleiterabschnitte umgebenden Mediums aus der Laufzeit des ersten und des zweiten Reflexionssignals durch die Auswerteeinheit 5,
- Bestimmen 13 eines Korrekturfaktors der Ausbreitungsgeschwindigkeit des Messsignals entlang des Wellenleiters 6 basierend auf den bestimmten Permittivitäten εᵣ₃ und εᵣ₂ und
- Bestimmen 14 des Füllstandes des in dem Behälter befindlichen Mediums aus der Laufzeit und der korrigierten Ausbreitungsgeschwindigkeit des wenigstens einen weiteren Reflexionssignals, wobei das weitere Reflexionssignal einer Reflexion des Messsignals an der Oberfläche des zu messenden Mediums entspricht.

Das dargestellte Verfahren 2 weist den Vorteil auf, dass aufgrund der Berücksichtigung der Permittivitätsverteilung oberhalb des Mediums bzw. der Anpassung der Ausbreitungsgeschwindigkeit des Messsignals bzw. des Reflexionssignals an diese Permittivitätsverteilung die Bestimmung des Füllstandes des zu messenden Mediums besonders zuverlässig ist.

### Bezugszeichen

1 TDR-Füllstandmessgerät
2 Verfahren zum Betreiben eines TDR-Füllstandmessgeräts
3 Sendeeinheit
4 Empfangseinheit
5 Auswerteeinheit
6 Wellenleiter
7 Referenzreflektor
8 funktionale Wellenleiterquerschnittsfläche
9 Aussenden eines Messsignals
10 Empfangen eines ersten Reflexionssignals
11 Empfangen eines zweiten Reflexionssignals
12 Bestimmen der Permittivität
13 Bestimmen eines Korrekturfaktors
14 Bestimmen des Füllstandes
15 Loch
16 Innenleiter
17 Außenleiter

## Patentansprüche

1. TDR-Füllstandmessgerät (1) zur Messung des Füllstandes eines Mediums in einem Behälter, umfassend wenigstens eine Sendeeinheit (3) zur Aussendung eines pulsförmigen elektromagnetischen Messsignals, wenigstens eine Empfangseinheit (4) für den Empfang wenigstens eines Reflexionssignals, wenigstens eine Auswerteeinheit (5) zur Auswertung des wenigstens einen Reflexionssignals und wenigstens einen Wellenleiter (6), wobei der Wellenleiter (6) wenigstens einen Leiter zur Führung des Messsignals und des Reflexionssignals aufweist, wobei der Wellenleiter wenigstens zwei Wellenleiterabschnitte aufweist, wobei jeder Wellenleiterabschnitt wenigstens eine funktionale Wellenleiterquerschnittsfläche (8) aufweist, wobei die funktionale Wellenleiterquerschnittsfläche (8) der Querschnittsfläche des wenigstens einen Leiters entspricht, wobei wenigstens ein Referenzreflektor (7) vorhanden ist und wobei der Referenzreflektor (7) derart ausgestaltet und angeordnet ist, dass im Betrieb zumindest ein Teil des Messsignals an dem wenigstens einen Referenzreflektor (7) wenigstens einmal reflektiert wird,
wobei der wenigstens eine Referenzreflektor (7) gebildet wird durch einen Übergang zwischen zwei Wellenleiterabschnitten mit unterschiedlichen Formen und/oder unterschiedlichen Größen der funktionalen Wellenleiterquerschnittsflächen (8), wobei wenigstens zwei Referenzreflektoren (7) vorhanden sind,
**dadurch gekennzeichnet,**
**dass** die wenigstens zwei Referenzreflektoren (7) als aufeinander folgende Verjüngungen des zumindest einen an der Führung des Messsignals beteiligten Leiters des Wellenleiters (6) ausgestaltet sind, sodass die funktionale Wellenleiterquerschnittsfläche des zweiten Wellenleiterabschnitts kleiner ist als die funktionale Querschnittsfläche des ersten Wellenleiterabschnitts und sodass die funktionale Wellenleiterquerschnittsfläche des dritten Wellenleiterabschnitts kleiner ist als die Wellenleiterquerschnittsfläche des zweiten Wellenleiterabschnitts.

2. TDR-Füllstandmessgerät (1) nach Anspruch 1, **dadurch gekennzeichnet, dass** der Übergang der Form und/oder der Größe zwischen den funktionalen Wellenleiterquerschnittsflächen (8) zumindest teilweise sprunghaft ausgestaltet ist.

3. TDR-Füllstandmessgerät (1) nach Anspruch 1 oder 2, **dadurch gekennzeichnet, dass** der Übergang der Form und/oder der Größe zwischen den funktionalen Wellenleiterquerschnittsflächen (8) zumindest teilweise in Form eines Übergangsbereichs kontinuierlich ausgestaltet ist.

4. TDR-Füllstandmessgerät (1) nach einem der Ansprüche 1 bis 3, **dadurch gekennzeichnet, dass** der Übergang der Form und/oder der Größe zwischen den funktionalen Wellenleiterquerschnittsflächen (8) zumindest teilweise in Ausbreitungsrichtung des Messsignals räumlich ausgedehnt ist.

5. TDR-Füllstandmessgerät (1) nach einem der Ansprüche 1 bis 4, **dadurch gekennzeichnet, dass** die Position der wenigstens zwei Referenzreflektoren (7) am Wellenleiter (6) in Abhängigkeit von den Dimensionen des Wellenleiters (6) und der Messumgebung und/oder von der im Betrieb zu erwartenden Temperaturverteilung im Behälter festgelegt ist.

6. TDR-Füllstandmessgerät (1) nach einem der Ansprüche 1 bis 5, **dadurch gekennzeichnet, dass** die wenigstens zwei Referenzreflektoren (7) in regelmäßigen Abständen entlang des Wellenleiters (6) angeordnet sind.

7. TDR-Füllstandmessgerät (1) nach einem der Ansprüche 1 bis 6, **dadurch gekennzeichnet, dass** zumindest der Übergang zwischen den funktionalen Wellenleiterquerschnittsflächen (8), der einen Referenzreflektor (7) bildet, einstückig ausgestaltet ist.

8. TDR-Füllstandmessgerät (1) nach einem der Ansprüche 1 bis 7, **dadurch gekennzeichnet, dass** der Wellenleiter (6) als Koaxialleiter, umfassend wenigstens einen Innenleiter (16) und wenigstens einen Außenleiter (17), ausgestaltet ist, wobei die Referenzreflektoren (7) durch den wenigstens einen Innenleiter (16) gebildet werden.

9. TDR-Füllstandmessgerät (1) nach einem der Ansprüche 1 bis 8, **dadurch gekennzeichnet, dass** der Wellenleiter (6) als Koaxialleiter, umfassend wenigstens einen Innenleiter (16) und wenigstens einen Außenleiter (17), ausgestaltet ist, wobei die Referenzreflektoren (7) durch den wenigstens einen Außenleiter (17) gebildet werden.

10. Verfahren (2) zum Betreiben eines TDR-Füllstandmessgerät (1) zur Messung des Füllstandes eines Mediums in einem Behälter, wobei das TDR-Füllstandmessgerät (1) wenigstens eine Sendeeinheit (3) zur Aussendung eines elektromagnetischen Messsignals, wenigstens eine Empfangseinheit (4) für den Empfang wenigstens eines reflektierten Reflexionssignals, wenigstens eine Auswerteeinheit (5) zur Auswertung des wenigstens einen Reflexionssignals und wenigstens einen Wellenleiter (6) aufweist, wobei der Wellenleiter (6) wenigstens einen Leiter zur Führung des Messsignals und des Reflexionssignals aufweist, wobei der Wellenleiter (6) wenigstens zwei Wellenleiterabschnitte aufweist, wobei jeder Wellenleiterabschnitt wenigstens eine funktionale Wellenleiterquerschnittsfläche (8) aufweist, wobei die funktionale Wellenleiterquerschnittsfläche (8) der Querschnittsfläche des wenigstens einen Leiters entspricht, wobei wenigstens ein Referenzreflektor (7) vorhanden ist und wobei der Referenzreflektor (7) derart ausgestaltet und angeordnet ist, dass im Betrieb zumindest ein Teil des Messsignals an dem wenigstens einen Referenzreflektor (7) wenigstens einmal reflektiert wird,
wobei der wenigstens eine Referenzreflektor (7) gebildet wird durch einen Übergang zwischen zwei Wellenleiterabschnitten mit unterschiedlichen Formen und/oder unterschiedlichen Größen der funktionalen Wellenleiterquerschnittsflächen (8),
wobei das Verfahren (2) die folgenden Schritte umfasst:
- Aussenden (9) eines Messsignals entlang des Wellenleiters (6) durch die Sendeeinheit (3),
- Empfangen (10) wenigstens eines Reflexionssignals durch die Empfangseinheit (4), wobei das Reflexionssignal zumindest einer Reflexion des Messsignals an dem wenigstens einen Referenzreflektor (7) entspricht,
- Empfangen (11) wenigstens eines weiteren Reflexionssignals durch die Empfangseinheit (4), wobei das weitere Reflexionssignal einer Reflexion des Messsignals an der Oberfläche des zu messenden Mediums entspricht,
- Bestimmen (12) wenigstens einer Permittivität ε des einen Wellenleiterabschnitt umgebenden Mediums aus der Laufzeit des wenigstens einen Reflexionssignals durch die Auswerteeinheit (5), wobei das Reflexionssignal einer Reflexion des Messsignals an dem wenigstens einen Referenzreflektor (7) entspricht,
- Bestimmen (13) eines Korrekturfaktors der Ausbreitungsgeschwindigkeit des Messsignals entlang des Wellenleiters (6) basierend auf der wenigstens einen Permittivität ε und
- Bestimmen (14) des Füllstandes des in dem Behälter befindlichen Mediums aus der Laufzeit und der korrigierten Ausbreitungsgeschwindigkeit des wenigstens einen weiteren Reflexionssignals, wobei das weitere Reflexionssignal einer Reflexion des Messsignals an der Oberfläche des zu messenden Mediums entspricht,
wobei wenigstens zwei Referenzreflektoren (7) vorhanden sind,
**dadurch gekennzeichnet, dass** die wenigstens zwei Referenzreflektoren (7) als aufeinander folgende Verjüngungen des zumindest einen an der Führung des Messsignals beteiligten Leiters des Wellenleiters (6) ausgestaltet sind, sodass die funktionale Wellenleiterquerschnittsfläche des zweiten Wellenleiterabschnitts kleiner ist als die funktionale Querschnittsfläche des ersten Wellenleiterabschnitts und sodass die funktionale Wellenleiterquerschnittsfläche des dritten Wellenleiterabschnitts kleiner ist als die Wellenleiterquerschnittsfläche des zweiten Wellenleiterabschnitts.

11. Verfahren nach Anspruch 10, **dadurch gekennzeichnet, dass** das TDR-Füllstandmessgerät nach einem der Ansprüche 2 bis 9 ausgestaltet ist.

## Claims

1. A TDR fill level measuring device (1) for measuring the fill level of a medium in a container, comprising at least one transmitting unit (3) for transmitting a pulse-shaped electromagnetic measuring signal, at least one receiving unit (4) for receiving at least one reflection signal, at least one evaluation unit (5) for evaluating the at least one reflection signal and at least one waveguide (6), wherein the waveguide (6) has at least one conductor for guiding the measuring signal and the reflection signal, wherein the waveguide has at least two waveguide sections, wherein each waveguide section has at least one functional waveguide cross-sectional face (8), wherein the functional waveguide cross-sectional face (8) corresponds to the cross-sectional face of the at least one conductor, wherein at least one reference reflector (7) is present, and wherein the reference reflector (7) is designed and arranged in such a manner that at least a part of the measuring signal is reflected at least once on the at least one reference reflector (7) during operation,
wherein the at least one reference reflection (7) is formed by a transition between two waveguide sections having different shapes and/or different sizes of the functional waveguide cross-sectional face (8), wherein at least two reference reflectors (7) are provided,
**characterized in**
**that** the at least two reference reflectors (7) are designed as successive tapers of the at least one conductor of the waveguide (6) involved in guiding the measuring signal, so that the functional waveguide cross-sectional area of the second waveguide section is smaller than the functional cross-sectional area of the first waveguide section and so that the functional waveguide cross-sectional area of the third waveguide section is smaller than the waveguide cross-sectional area of the second waveguide section.

2. TDR fill level measuring device (1) according to claim 1, **characterized in that** the transition of the form and/or size between the functional waveguide cross-sectional faces (8) is designed at least partially step-like.

3. TDR fill level measuring device (1) according to claim 1 or 2, **characterized in that** the transition of the form and/or size between the functional waveguide cross-sectional faces (8) is continuously designed at least partially in the form of a transitional section.

4. TDR fill level measuring device (1) according to any one of claims 1 to 3, **characterized in that** the transition of the form and/or size between the functional waveguide cross-sectional faces (8) is at least partially spatially extended in the direction of the propagation of the measuring signal.

5. TDR fill level measuring device (1) according to any one of claims 1 to 4, **characterized in that** the position of the at least two reference reflectors (7) on the waveguide (6) is determined depending on the dimensions of the waveguide (6) and the measuring environment and/or on the temperature distribution to be expected in the container during operation.

6. TDR fill level measuring device (1) according to any one of claims 1 to 5, **characterized in that** the at least two reference reflectors (7) are arranged at regular intervals along the waveguide (6).

7. TDR fill level measuring device (1) according to any one of claims 1 to 6, **characterized in that** at least the transition between the functional waveguide cross-sectional faces (8) that form the references reflector (7) is designed as one piece.

8. TDR fill level measuring device (1) according to any one of claims 1 to 7, **characterized in that** the waveguide (6) is designed as a coaxial conductor comprising at least one inner conductor (16) and at least one outer conductor (17), wherein the reference reflectors (7) are formed by the at least one inner conductor (16).

9. TDR fill level measuring device (1) according to anyone of claims 1 to 8, **characterized in that** the waveguide (6) is designed as a coaxial conductor comprising at least one inner conductor (16) and at least one outer conductor (17), wherein the reference reflectors (7) are formed by the at least one outer conductor (17).

10. Method (2) for operating a TDR fill level measuring device (1) for measuring the fill level of a medium in a container, wherein the TDR fill level measuring device (1) has at least one transmitting unit (3) for transmitting a pulse-shaped electromagnetic measuring signal, at least one receiving unit (4) for receiving at least one reflected reflection signal, at least one evaluation unit (5) for evaluating the at least one reflection signal and has at least one waveguide (6) wherein the waveguide (6) has at least one conductor for guiding the measuring signal and the reflection signal, wherein the waveguide has at least two waveguide sections, wherein each waveguide section has at least one functional waveguide cross-sectional face (8), wherein the functional waveguide cross-sectional face (8) corresponds to the cross-sectional face of the at least one conductor, wherein at least one reference reflector (7) is present, and wherein the reference reflector (7) is designed and arranged in such a manner that at least a part of the measuring signal is reflected at least once on the at least one reference reflector (7) during operation,
wherein the at least one reference reflector (7) is formed by a transition between two waveguide sections having different shapes and/or different sizes of the functional waveguide cross-sectional faces (8),
wherein the method (2) comprises the following steps:
- transmitting (9) a measuring signal along the waveguide (6) by the transmitting unit (3),
- receiving (10) at least one reflection signal by the receiving unit (4), wherein the reflection signal is at least a reflection of the measuring signal on the at least one reference reflector (7),
- receiving (11) at least one further reflection signal by the receiving unit (4), wherein the further reflection signal is a reflection of the measuring signal on the surface of the medium to be measured,
- determining (12) at least one permittivity ε of a medium surrounding a waveguide section from the transit time of the at least one reflection signal by the evaluation unit (5), wherein the reflection signal is a reflection of the measuring signal on the at least one reference reflector (7),
- determining (13) a correction factor of the propagation speed of the measuring signal along the waveguide (6) based on the at least one permittivity ε and
- determining (14) the fill level of the medium located in the container from the transit time and the corrected propagation speed of the at least one further reflection signal, wherein the further reflection signal is a reflection of the measuring signal on the surface of the medium to be measured;
wherein at least two reference reflectors (7) are present,
**characterized in**
**that** the at least two reference reflectors (7) are designed as successive tapers of the at least one conductor of the waveguide (6) used for guiding the measuring signal, so that the functional waveguide cross-sectional area of the second waveguide section is smaller than the functional cross-sectional area of the first waveguide section and so that the functional waveguide cross-sectional area of the third waveguide section is smaller than the waveguide cross-sectional area of the second waveguide section.

11. Method according to claim 10, **characterized in that** the TDR fill level measuring device is designed according to any one of claims 2 to 9.

## Revendications

1. Appareil de mesure de niveau de remplissage TDR (1) permettant de mesurer le niveau de remplissage d'un milieu dans un récipient, comprenant au moins une unité d'émission (3) pour émettre un signal de mesure électromagnétique en forme d'impulsion, au moins une unité de réception (4) pour recevoir au moins un signal de réflexion, au moins une unité d'évaluation (5) pour évaluer ledit au moins un signal de réflexion et au moins un guide d'ondes (6), le guide d'ondes (6) présentant au moins un conducteur pour conduire le signal de mesure et le signal de réflexion, dans lequel le guide d'ondes présente au moins deux sections de guide d'ondes, chaque section de guide d'ondes présentant au moins une superficie de la section de guide d'ondes fonctionnelle (8), dans lequel la superficie de la section de guide d'ondes fonctionnelle (8) correspond à la superficie de la section dudit au moins un conducteur, dans lequel au moins un réflecteur de référence (7) est présent, et dans lequel le réflecteur de référence (7) est configuré et disposé de telle sorte qu'en cours de fonctionnement, au moins une partie du signal de mesure est réfléchie au moins une fois au niveau dudit au moins un réflecteur de référence (7),
dans lequel ledit au moins un réflecteur de référence (7) est formé par un passage entre deux sections de guide d'ondes de formes différentes et/ou de tailles différentes des superficies de la section de guide d'ondes fonctionnelles (8), dans lequel au moins deux réflecteurs de référence (7) sont présents,
**caractérisé en ce que**
les au moins deux réflecteurs de référence (7) sont configurés comme des conicités consécutives dudit au moins un conducteur du guide d'ondes (6), participant à la conduction du signal de mesure, de sorte que la superficie de la section de guide d'ondes fonctionnelle de la deuxième section de guide d'ondes est inférieure à la superficie de la section fonctionnelle de la première section de guide d'ondes, et de sorte que la superficie de la section de guide d'ondes fonctionnelle de la troisième section de guide d'ondes est inférieure à la superficie de la section de guide d'ondes de la deuxième section de guide d'ondes.

2. Appareil de mesure de niveau de remplissage TDR (1) selon la revendication 1, **caractérisé en ce que** le passage de la forme et/ou de la taille entre les superficies de la section de guide d'ondes fonctionnelles (8) est configuré au moins en partie de manière discontinue.

3. Appareil de mesure de niveau de remplissage TDR (1) selon la revendication 1 ou 2, **caractérisé en ce que** le passage de la forme et/ou de la taille entre les superficies de la section de guide d'ondes fonctionnelles (8) est configuré au moins en partie de manière continue sous la forme d'une zone de passage.

4. Appareil de mesure de niveau de remplissage TDR (1) selon l'une quelconque des revendications 1 à 3, **caractérisé en ce que** le passage de la forme et/ou de la taille entre les superficies de la section de guide d'ondes fonctionnelles (8) s'étend spatialement au moins en partie dans la direction de propagation du signal de mesure.

5. Appareil de mesure de niveau de remplissage TDR (1) selon l'une quelconque des revendications 1 à 4, **caractérisé en ce que** la position des au moins deux réflecteurs de référence (7) sur le guide d'ondes (6) est définie en fonction des dimensions du guide d'ondes (6) et de l'environnement de mesure et/ou de la distribution de température dans le récipient attendue en cours de fonctionnement.

6. Appareil de mesure de niveau de remplissage TDR (1) selon l'une quelconque des revendications 1 à 5, **caractérisé en ce que** les au moins deux réflecteurs de référence (7) sont disposés à intervalles réguliers le long du guide d'ondes (6).

7. Appareil de mesure de niveau de remplissage TDR (1) selon l'une quelconque des revendications 1 à 6, **caractérisé en ce qu'**au moins le passage entre les superficies de la section de guide d'ondes fonctionnelles (8) qui constitue un réflecteur de référence (7) est configuré d'un seul tenant.

8. Appareil de mesure de niveau de remplissage TDR (1) selon l'une quelconque des revendications 1 à 7, **caractérisé en ce que** le guide d'ondes (6) est configuré sous forme de conducteur coaxial, comprenant au moins un conducteur interne (16) et au moins un conducteur externe (17), les réflecteurs de référence (7) étant formés par ledit au moins un conducteur interne (16).

9. Appareil de mesure de niveau de remplissage TDR (1) selon l'une quelconque des revendications 1 à 8, **caractérisé en ce que** le guide d'ondes (6) est configuré sous forme de conducteur coaxial, comprenant au moins un conducteur interne (16) et au moins un conducteur externe (17), les réflecteurs de référence (7) étant formés par ledit au moins un conducteur externe (17).

10. Procédé (2) permettant de faire fonctionner un appareil de mesure de niveau de remplissage TDR (1) permettant de mesurer le niveau de remplissage d'un milieu dans un récipient, dans lequel l'appareil de mesure de niveau de remplissage TDR (1) présente au moins une unité d'émission (3) pour émettre un signal de mesure électromagnétique, au moins une unité de réception (4) pour recevoir au moins un signal de réflexion réfléchi, au moins une unité d'évaluation (5) pour évaluer ledit au moins un signal de réflexion et au moins un guide d'ondes (6), dans lequel le guide d'ondes (6) présente au moins un conducteur pour conduire le signal de mesure et le signal de réflexion, le guide d'ondes (6) présentant au moins deux sections de guide d'ondes, dans lequel chaque section de guide d'ondes présente au moins une superficie de la section de guide d'ondes fonctionnelle (8), la superficie de la section de guide d'ondes fonctionnelle (8) correspondant à la superficie de la section dudit au moins un conducteur, dans lequel au moins un réflecteur de référence (7) est présent, et dans lequel le réflecteur de référence (7) est configuré et disposé de telle sorte qu'en cours de fonctionnement, au moins une partie du signal de mesure est réfléchie au moins une fois au niveau dudit au moins un réflecteur de référence (7),
dans lequel ledit au moins un réflecteur de référence (7) est formé par un passage entre deux sections de guide d'ondes de formes différentes et/ou de tailles différentes des superficies de la section de guide d'ondes fonctionnelles (8),
dans lequel le procédé (2) comprend les étapes suivantes consistant à :
- émettre (9) un signal de mesure le long du guide d'ondes (6) par l'unité d'émission (3),
- recevoir (10) au moins un signal de réflexion par l'unité de réception (4), le signal de réflexion correspondant au moins à une réflexion du signal de mesure au niveau dudit au moins un réflecteur de référence (7),
- recevoir (11) au moins un signal de réflexion supplémentaire par l'unité de réception (4), le signal de réflexion supplémentaire correspondant à une réflexion du signal de mesure à la surface du milieu à mesurer,
- déterminer (12) au moins une permittivité ε du milieu entourant une section de guide d'ondes à partir du temps de propagation dudit au moins un signal de réflexion par l'unité d'évaluation (5), dans lequel le signal de réflexion correspond à une réflexion du signal de mesure au niveau dudit au moins un réflecteur de référence (7),
- déterminer (13) un facteur de correction de la vitesse de propagation du signal de mesure le long du guide d'ondes (6) sur la base de ladite au moins une permittivité ₂, et
- déterminer (14) le niveau de remplissage du milieu se trouvant dans le récipient à partir du temps de propagation et de la vitesse de propagation corrigée dudit au moins un signal de réflexion supplémentaire, le signal de réflexion supplémentaire correspondant à une réflexion du signal de mesure à la surface du milieu à mesurer ;
dans lequel au moins deux réflecteurs de référence (7) sont présents,
**caractérisé en ce que** les au moins deux réflecteurs de référence (7) sont configurés comme des conicités consécutives dudit au moins un conducteur du guide d'ondes (6), participant à la conduction du signal de mesure, de sorte que la superficie de la section de guide d'ondes fonctionnelle de la deuxième section de guide d'ondes est inférieure à la superficie de la section fonctionnelle de la première section de guide d'ondes, et de sorte que la superficie de la section de guide d'ondes fonctionnelle de la troisième section de guide d'ondes est inférieure à la superficie de la section de guide d'ondes de la deuxième section de guide d'ondes.

11. Procédé selon la revendication 10, **caractérisé en ce que** l'appareil de mesure de niveau de remplissage TDR est configuré selon l'une quelconque des revendications 2 à 9.
